# EUROPÄISCHE PATENTANMELDUNG

(11) **EP 1 563 772 A1**
(43) Veröffentlichungstag der Anmeldung: **17.08.2005**
(21) Anmeldenummer: 04026355.0
(22) Anmeldetag: 05.11.2004
(51) Int. Cl.: A47J 27/18

(54) **Folienbeheizte Warmhalte-Einrichtung mit Temperaturwächter**

(30) Priorität: 14.02.2004 DE 202004002289 U
(71) Anmelder: HUPFER Metallwerke GmbH & Co. KG, 48653 Coesfeld (DE)
(72) Erfinder: Schumacher, Helmut, 48653 Coesfeld (DE)
(74) Vertreter: Habbel, Lutz, Dipl.-Ing.

(57) **Zusammenfassung**

Die Erfindung bezieht sich auf eine Warmhalte-Einrichtung für Großküchen, mit einem beheizbaren Becken (4), und mit einer im Becken (4) vorgesehenen, die Heizungswärme aufnehmenden Medium, und mit einer am Becken (4) anliegenden Folienheizung (5) zur Beheizung des Beckens (4), und mit einem Temperaturwächter (7), welcher bei Überschreiten einer vorbestimmten Temperatur eine Reduzierung der Folienheizleistung auslöst, wobei der Boden (8) des Beckens (4) einen Bereich aufweist, welcher höher angeordnet ist als der gesamte übrige Boden (8), und dass in diesem höchsten Bereich der Temperaturwächter (7) angeordnet ist.

## Beschreibung

Die Erfindung betrifft eine Warmhalte-Einrichtung nach dem Oberbegriff des Anspruchs 1.

Beispielsweise aus der DE 295 19 234 U1 sind derartige Einrichtungen bekannt.

Die Folienheizung weist eine starke Heizleistung auf. Daher ist ein Temperaturwächter vorgesehen, der beispielsweise bei einem zu niedrigen Füllstand des Mediums im Becken die Folie vor einer Überhitzung und damit vor einer Selbstzerstörung schützt. Als "Temperaturwächter" im Sinne des vorliegenden Vorschlags kann entweder eine komplexe Baugruppe verstanden werden, welche einen Sensor und eine dem Sensor nachgeschaltete Elektronik umfasst, oder es kann lediglich der Sensor als Temperaturwächter angesehen werden. Relevant für den vorliegenden Vorschlag ist die Tatsache, dass der Temperaturwächter die Folientemperatur erfasst und bei unzuträglich hohen Temperaturen eine Reduzierung der Heizleistung auslöst. Üblicherweise erfolgt eine derartige Reduzierung dadurch, dass die Folienheizung komplett abgeschaltet wird.

In der Praxis besteht das Problem, dass bei niedrigerem Füllstand des Mediums im Becken die Heizleistung der Folie nicht in ausreichendem Maß vom Medium aufgenommen werden kann, so dass es zu der Überhitzung an bestimmten Stellen des Bodens kommen kann. Aufgrund der Wärmeeinwirkung ist nicht auszuschließen, dass der Boden, üblicherweise ein tiefgezogenes Blech, geringfügige Wellen wirft und dementsprechende Unebenheiten aufweist, so dass die leicht höheren Bereiche des Bodens trockenfallen können, oder bei einer umgekehrt ausgeprägten Verwerfung kann sich das wärmeaufnehmende Medium in einer Senke sammeln, während die umliegenden Ränder trockenfallen können. Weiterhin ist nicht auszuschließen, dass bei fahrbaren Warmhalte-Einrichtungen die Einrichtung möglicherweise schräg abgestellt wird, so dass bei niedrigen Füllständen des Mediums durch diese Schrägstellung Bereiche des Bodens trockenfallen können, an denen dann die Folie überhitzt, weil die entstandene Heizleistung nicht vom Medium aufgenommen werden kann.

Der Erfindung liegt die Aufgabe zugrunde, eine gattungsgemäße Warmhalte-Einrichtung dahingehend zu verbessern, dass ein betriebssicherer, zuverlässiger Schutz der Folienheizung vor Überhitzungen auch bei niedrigen Medium-Füllständen gewährleistet ist.

Diese Aufgabe wird durch eine Warmhalte-Einrichtung mit den Merkmalen des Anspruchs 1 gelöst.

Die Erfindung schlägt mit anderen Worten vor, den Boden des Beckens nicht in herkömmlicher Weise etwa horizontal auszugestalten, sondern bewusst einen höchsten Bereich bei der Bodengestaltung vorzusehen, der demzufolge auch am ehesten trockenfallen wird. In diesem Bereich ist vorschlagsgemäß der Temperaturwächter angeordnet. So wird zuverlässig dieser am ehesten einer Überhitzung ausgesetzte Bereich durch den Temperaturwächter überwacht. Somit ist sichergestellt, dass eventuelle Überhitzungen an einer bestimmten Stelle auftreten werden und durch den Temperaturwächter zur Reduktion der Heizleistung genutzt werden können, bevor die Überhitzungen ein die Folienheizung schädigendes Maß erreichen können.

Die bewusste Ausgestaltung eines höchsten Bereiches des Bodens bedeutet, dass dieser höchste Bereich deutlich höher angeordnet ist als es ungeplante, zufällig sich ergebende Bereiche des Bodens sein können, beispielsweise solche Bereiche, die sich aufgrund von temperaturbedingten Welligkeiten ergeben können. So ist auch bei derartigen Welligkeiten eine zuverlässige und frühzeitig reagierende Temperaturüberwachung der Folienheizung sichergestellt.

Vorteilhaft kann der Boden schräg ausgestaltet sein, also schräg von einem tiefsten zu einem höchsten Bereich ansteigend verlaufend. Dabei kann diese Schräge geradlinig, gebogen oder wellig verlaufen. In jedem Fall ergibt sich eine herstellungstechnisch günstigere und wirtschaftliche Fertigung des Beckens als beispielsweise bei einer Ausgestaltung mit einem zentralen kuppel- oder kegelförmig ausgestalteten höchsten Bereich. Insbesondere ist durch die Ausgestaltung eines schräg ansteigenden Bodens eine problemlose und großflächige Anbringung einer Folienheizung am Boden möglich.

Vorteilhaft kann die gesamte Einrichtung fahrbar ausgestaltet sein, wie beispielsweise ein Speisenausgabewagen. Insbesondere für derartig fahrbare Einrichtungen weist die vorschlagsgemäße Ausgestaltung den Vorteil auf, dass auch bei eventuell schief abgestellten Einrichtungen die zuverlässige Temperaturüberwachung wirksam ist und Schäden an der Folienheizung verhindert. Dabei geht der vorliegende Vorschlag von der Überlegung aus, dass derartige Einrichtungen aufgrund ihres Gewichtes nicht über einen sehr großen Neigungswinkel abgestellt werden und dass kleinere Schrägstellungen, wie sie werden und dass kleinere Schrägstellungen, wie sie beispielsweise bei uhebenem Boden oder bei einem Wechsel des Bodenbelages vorkommen können, durch die Ausgestaltung des Beckens insofern kompensiert werden, als nach wie vor der als höchster Bereich vorgesehene Bereich des Bodens auch tatsächlich geodätisch höher liegt als die übrigen Bereiche des Bodens.

Vorteilhaft kann der Boden des Beckens nicht nur einen bewusst höchsten Bereich, sondern auch einen bewusst tiefsten Bereich aufweisen, so dass eine zuverlässige Entleerung des Mediums aus dem Becken möglich ist. Insbesondere aufgrund der angesprochenen temperaturbedingten Welligkeiten kann bei einem konstruktionsmäßig horizontalen, plan ausgestalteten Beckenboden nicht ausgeschlossen werden, dass das Medium in welligen Senken stehen bleibt und nicht vollständig abgelassen werden kann, so dass demgegenüber die vorschlagsgemäße Ausgestaltung mit einem tiefsten Bereich einen hygienischen Vorteil aufweist. Insbesondere bei einem schräg ansteigenden Beckenboden ergibt sich automatisch ein tiefster und ein höchster Bereich, so dass problemlos eine zuverlässige Entleerung des Beckens sichergestellt werden kann, wenn die Auslassöffnung in dem tiefsten Bereich dieses Beckens vorgesehen ist.

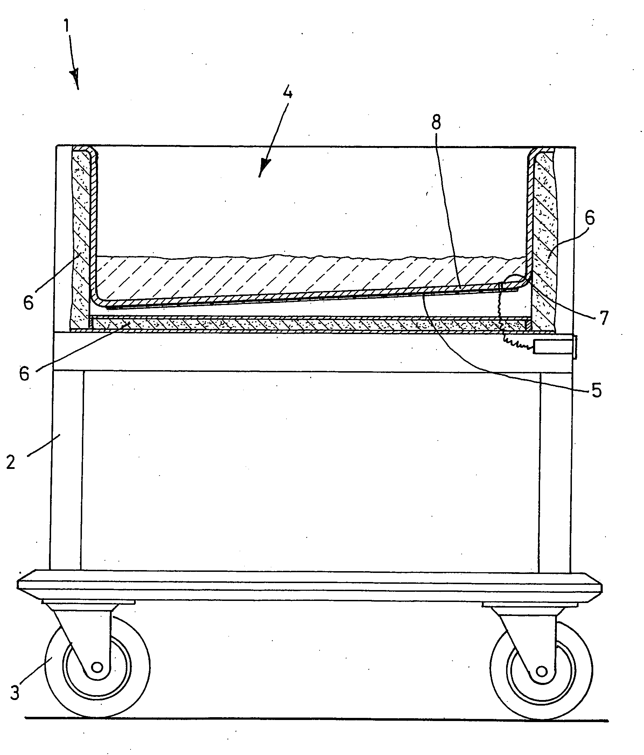

Ein Ausführungsbeispiel der Erfindung wird anhand der Zeichnung nachfolgend näher erläutert.

Dabei ist mit 1 insgesamt ein Speisenausgabewagen bezeichnet, der über ein Gehäuse 2 und Laufräder 3 verfügt sowie über ein Becken 4, in dem sich ein Medium, beispielsweise Wasser befindet. Das Becken 4 ist an seiner Unterseite, also am Boden, mit einer Folienheizung 5 beklebt. Seitlich und unterhalb des Beckens 4 ist ein Isolierwerkstoff 6 vorgesehen, um die Wärmeverluste zu minimieren.

Rein beispielhaft ist dargestellt, dass dieser Isolierwerkstoff 6 unterhalb des Beckens 4 eine konstante Schichtdicke aufweist. In Anpassung an den Verlauf des Bodens kann ein keilförmiges Stück des Isolierwerkstoffes 6 verwendet werden. Die dargestellte Ausgestaltung ist jedoch besonders preisgünstig, da keine speziell angepassten Stücke des Isolierwerkstoffes 6 verwendet werden müssen, sondern der Isolierwerkstoff 6 aus einem Flächen- bzw. Plattenmaterial ausgeschnitten werden kann. Insbesonder kann vorteilhaft die gesamte übrige Konstruktion des Speisenausgabewagens einschließlich des verwendeten Isolierwerkstoffes 6 unverändert beibehalten werden und lediglich ein vorschlagsgemäßes Becken verwendet werden.

In das Becken 4 kann eine sogenannte Mulde eingehängt werden, welche die Speisen enthält, so dass das aufgewärmte Medium die Mulden und die darin befindlichen Speisen warm hält. Als "Warmhalte-Einrichtung" im Sinne des vorliegenden Vorschlages werden jedoch auch Einrichtungen verstanden, die nicht - oder nicht nur - zum Warmhalten zubereiteter Speisen dienen, sondern in denen beispielsweise Speisen zubereitet werden sollen, beispielsweise im Wasserbad, wobei in diesem Fall das Wasser warm gehalten wird und es sich insofern auch bei einer derartigen Einrichtung um eine Warmhalte-Einrichtung handelt.

Die Folienheizung 5 weist einen Temperaturwächter 7 auf, der bei Erreichen einer unzulässig hohen Temperatur die Heizleistung der Folienheizung 5 reduziert. Das Becken 4 ist mit einem schräg ansteigenden Boden 8 versehen und der Temperaturwächter 7 befindet sich im obersten Bereich dieses Bodens 8, der am ehesten trockenfallen wird. Der Temperaturwächter 7 ist Teil einer Temperatur-Regelungsschaltung, die nicht nur eine unzulässige Überhizung der Folineheizung verhindert, sondern die auch z. B. während des Heizbetriebs die Einhaltung einer bestimmten, vorgewählten Temperatur regelt. Am gegenüberliegenden, tiefsten Bereich des Bodens 8 ist ein in der Zeichnung nicht dargestellter Ablasshahn vorgesehen, um das Becken 4 vollständig entleeren zu können, zum Beispiel das darin enthaltene Wasser ablassen zu können.

## Patentansprüche

1. Warmhalte-Einrichtung für Großküchen,
mit einem beheizbaren Becken,
und mit einer im Becken vorgesehenen, die Heizungswärme aufnehmenden Medium,
und mit einer am Becken anliegenden Folienheizung zur Beheizung des Beckens,
und mit einem Temperaturwächter, welcher bei Überschreiten einer vorbestimmten Temperatur eine Reduzierung der Folienheizleistung auslöst,
**dadurch gekennzeichnet, dass** der Boden (8) des Beckens (4) einen Bereich aufweist, welcher höher angeordnet ist als der gesamte übrige Boden (8),
und dass in diesem höchsten Bereich der Temperaturwächter (7) angeordnet ist.

2. Warmhalte-Einrichtung nach Anspruch 1, **dadurch gekennzeichnet, dass** der Boden (8) schräg zu dem höchsten Bereich ansteigend ausgestaltet ist.

3. Warmhalte-Einrichtung nach Anspruch 1 oder 2, **dadurch gekennzeichnet, dass** die Einrichtung (1) fahrbar ist, wie ein Speisen-Ausgabewagen.

4. Warmhalte-Einrichtung nach einem der vorhergehenden Ansprüche, **dadurch gekennzeichnet, dass** der Boden (8) einen Bereich aufweist, welcher tiefer als der gesamte übrige Boden (8) angeordnet ist,
und dass in diesem tiefsten Bereich eine Ablassöffnung für das Medium vorgesehen ist.
